# EUROPÄISCHE PATENTSCHRIFT

(11) **EP 3 785 250 B1**
(45) Veröffentlichungstag und Bekanntmachung des Hinweises auf die Patenterteilung: **27.10.2021**
(21) Anmeldenummer: 19724729.9
(22) Anmeldetag: 18.04.2019
(51) Int. Cl.: G08G 1/16

(54) **VERFAHREN UND VORRICHTUNG ZUM KOOPERATIVEN ABSTIMMEN VON ZUKÜNFTIGEN FAHRMANÖVERN EINES FAHRZEUGS MIT FREMDMANÖVERN ZUMINDEST EINES FREMDFAHRZEUGS**
METHOD AND APPARATUS FOR COOPERATIVELY COORDINATING FUTURE DRIVING MANOEUVRES OF A VEHICLE WITH FOREIGN MANOEUVRES OF AT LEAST ONE FOREIGN VEHICLE
PROCÉDÉ ET DISPOSITIF PERMETTANT D'ACCORDER DE MANIÈRE COOPÉRATIVE DES MANOEUVRES DE CONDUITES À VENIR D'UN VÉHICULE AVEC DES MANOEUVRES EXTÉRIEURES D'AU MOINS UN AUTRE VÉHICULE

(30) Priorität: 24.04.2018 DE 102018109885
(43) Veröffentlichungstag der Anmeldung: 03.03.2021
(73) Patentinhaber: Robert Bosch GmbH, 70469 Stuttgart (DE); Continental Teves AG & Co. OHG, 60488 Frankfurt (DE)
(72) Erfinder: FUCHS, Hendrik, 31141 Hildesheim (DE); WILDSCHÜTTE, Florian, 31139 Hildesheim (DE); MICHALKE, Thomas, 71263 Weil der Stadt (DE); LLATSER MARTI, Ignacio, 31135 Hildesheim (DE); DOLGOV, Maxim, 71272 Renningen (DE); STRUNCK, Sebastian, 65527 Niedernhausen (DE); SCHÖNICHEN, Jonas, 64331 Weiterstadt (DE); GROTENDORST, Thomas, 65760 Eschborn (DE)
(74) Vertreter: Qip Patentanwälte Dr. Kuehn & Partner mbB
(86) Internationale Anmeldenummer: PCT/DE2019/100371
(87) Internationale Veröffentlichungsnummer: WO 2019/206378

(56) Entgegenhaltungen:
- DE-A1-102014 211 507
- DE-A1-102015 221 817

## Beschreibung

### Gebiet der Erfindung

Die Erfindung betrifft ein Verfahren und eine Vorrichtung zum kooperativen Abstimmen von zukünftigen Fahrmanövern eines Fahrzeugs mit Fremdmanövern zumindest eines Fremdfahrzeugs.

### Stand der Technik

Über Funk können Fahrzeuge Nachrichten untereinander und mit Infrastruktureinrichtungen austauschen. Beispielsweise kann ein Fahrzeug Objekte in seinem Erfassungsbereich erfassen und eine die erfassten Objekte beschreibende Objektnachricht versenden. Ein anderes Fahrzeug kann so ein von dem Fahrzeug außerhalb eines eigenen Erfassungsbereichs erfasstes Objekt in eigene Berechnungen mit einbeziehen. Ebenso kann das Fahrzeug eine seine geplante Fahrtroute abbildende Routingnachricht bereitstellen, um für andere Fahrzeuge eine verbesserte Routenplanung zu ermöglichen.

Die DE 10 2007 058 538 A1 beschreibt ein Verfahren zum Kontrollieren einer Gefahrensituation im Verkehr.

Die DE 10 2012 011 994 A1 beschreibt ein Verfahren zur Unterstützung von Fahrerassistenz- und/oder Sicherheitsfunktionen von Kraftfahrzeugen.

Die DE 10 2015 221 817 A1 beschreibt ein Verfahren zum dezentralen Abstimmen von Fahrmanövem.

Die DE 10 2014 211 507 A1 beschreibt ein Verfahren für ein Fahrerassistenzsystem eines Fahrzeugs. Dabei wird eine Umgebungsinformation einer Umgebung des Fahrzeugs erfasst und eine Gruppe von aktuell möglichen Eigenfahrmanövern auf der Grundlage der Umgebungsinformation bestimmt. Ferner wird eine Gruppe von aktuell möglichen Fremdfahrmanövern von einem Fremdfahrzeug in der Umgebung des Fahrzeugs empfangen und eine Gruppe von aktuell möglichen Fahrmanöverkombinationen bestimmt, welche Kombinationen aus aktuell möglichen Eigenfahrmanövern und aktuell möglichen Fremdfahrmanövern umfasst. Für jede Kombination der Gruppe von aktuell möglichen Fahrmanöverkombinationen wird ein entsprechender Gesamtkostenwert bestimmt und in Abhängigkeit von den Gesamtkostenwerten eine Kombination aus der Gruppe von aktuell möglichen Fahrmanöverkombinationen ausgewählt. Das Eigenfahrmanöver der ausgewählten Kombination wird ausgeführt.

### Offenbarung der Erfindung

Vor diesem Hintergrund werden mit dem hier vorgestellten Ansatz ein Verfahren zum kooperativen Abstimmen von zukünftigen Fahrmanövern eines Fahrzeugs mit Fremdmanövern zumindest eines Fremdfahrzeugs, eine entsprechende Vorrichtung, sowie schließlich ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, zukünftige Fahrmanöver verschiedener Fahrzeuge in gegenseitigem Einvernehmen abzustimmen, sodass keines der Fahrzeuge einen unverhältnismäßig großen Lenkeingriff, Bremseingriff und/oder Beschleunigungseingriff ausführen muss, um einen fließenden Verkehr zu ermöglichen. Ein hierfür eingesetztes Verfahren kann unter Einsatz einer Vorrichtung, wie z.B. eines Steuergeräts, durchgeführt werden. Zur Durchführung des Verfahrens können Signale, Messwerte oder ähnliches herangezogen und/oder analysiert werden, welche beispielsweise von Sensoren, Messgeräten oder ähnlichem bereitgestellt werden. Dabei kann das Verfahren vollautomatisiert oder teilautomatisiert durchgeführt werden. Ein Eingreifen eines Menschen braucht dabei zwar nicht ausgeschlossen sein, kann aber nicht notwendig sein.

Es wird ein Verfahren zum kooperativen Abstimmen von zukünftigen Fahrmanövern eines Fahrzeugs mit Fremdmanövern zumindest eines Fremdfahrzeugs vorgestellt, wobei das Verfahren die folgenden Schritte aufweist:
Empfangen eines Fremddatenpakets von dem Fremdfahrzeug, wobei in dem Fremddatenpaket eine Fremdtrajektorienschar aus einer Fremdbezugstrajektorie und, optional, zumindest einer Fremdtrajektorie für das Fremdfahrzeug enthalten ist, wobei in dem Fremddatenpaket ferner ein die Fremdbezugstrajektorie kennzeichnender Fremdbezugsaufwandswert und, optional, ein die Fremdtrajektorie kennzeichnender Fremdaufwandswert enthalten sind;
Auswählen einer Trajektorie aus einer Trajektorienschar für das Fahrzeug als Bezugstrajektorie für das Fahrzeug unter Verwendung der Fremdbezugstrajektorie und optional der Fremdtrajektorie, wobei eine zu der Fremdbezugstrajektorie und optional zu der Fremdtrajektorie innerhalb eines Kollisionshorizonts kollisionsfreie Trajektorie der Trajektorienschar als Bezugstrajektorie ausgewählt wird;
Bewerten der Bezugstrajektorie und weiterer Trajektorien der Trajektorienschar unter Verwendung einer unteren Grenztrajektorie und einer oberen Grenztrajektorie, wobei der Bezugstrajektorie ein Bezugsaufwandswert und den Trajektorien je ein Aufwandswert zugeordnet wird, wobei die untere Grenztrajektorie eine momentane Idealtrajektorie für das Fahrzeug mit einem niedrigsten möglichen Fahraufwand repräsentiert und einen unteren Grenzwert eines Aufwandswerteraums definiert und die obere Grenztrajektorie eine Trajektorie mit einem momentan maximal akzeptablen Fahraufwand zur Kooperation repräsentiert und einen oberen Grenzwert des Aufwandswerteraums definiert;
Bestimmen eines Kooperationsbedarfswerts unter Verwendung des Bezugsaufwandswerts, des unteren Grenzwerts, des oberen Grenzwerts, des Fremdbezugsaufwandswerts und, optional, des Fremdaufwandswerts, wobei der Kooperationsbedarfswert repräsentiert, ob dem Fremdfahrzeug eine Kooperation angeboten werden soll, oder von dem Fremdfahrzeug eine Kooperation angefordert werden soll.

Auswählen zumindest einer Kooperationstrajektorie aus den Trajektorien der Trajektorienschar unter Verwendung des Bezugsaufwandswerts und des Kooperationsbedarfswerts, wobei als Kooperationstrajektorie eine Trajektorie mit einem Aufwandswert zwischen dem Bezugsaufwandswert und dem oberen Grenzwert als Alternativtrajektorie ausgewählt wird, wenn der Kooperationsbedarfswert repräsentiert, dass dem Fremdfahrzeug eine Kooperation angeboten werden soll, oder wobei als Kooperationstrajektorie eine Trajektorie mit einem Aufwandswert zwischen dem Bezugsaufwandswert und dem unteren Grenzwert als Bedarfstrajektorie ausgewählt wird, wenn der Kooperationsbedarfswert repräsentiert, dass von dem Fremdfahrzeug eine Kooperation angefordert werden soll.

Senden eines Datenpakets an das Fremdfahrzeug, wobei das Datenpaket die Bezugstrajektorie und den zu der Bezugstrajektorie zugehörigen Bezugsaufwandswert sowie zumindest die Kooperationstrajektorie und den zu der Kooperationstrajektorie zugehörigen Aufwandswert enthält.

Mit anderen Worten ausgedrückt wird vorliegend ein Verfahren zum kooperativen Abstimmen von zukünftigen Fahrmanövern eines Fahrzeugs mit Fremdmanövern zumindest eines Fremdfahrzeugs vorgestellt, wobei das Verfahren die folgenden Schritte aufweist:
Empfangen eines Fremddatenpakets von dem Fremdfahrzeug, wobei in dem Fremddatenpaket eine Fremdtrajektorienschar aus zumindest einer Fremdbezugstrajektorie für das Fremdfahrzeug enthalten ist, wobei in dem Fremddatenpaket ferner ein die Fremdbezugstrajektorie kennzeichnender Fremdbezugsaufwandswert enthalten ist;
Auswählen einer Trajektorie aus einer Trajektorienschar für das Fahrzeug als Bezugstrajektorie für das Fahrzeug unter Verwendung der Fremdbezugstrajektorie und
ggf. der Fremdbedarfstrajektorie, wobei eine zu der Fremdbezugstrajektorie innerhalb eines Kollisionshorizonts kollisionsfreie Trajektorie der Trajektorienschar als Bezugstrajektorie ausgewählt wird, die zusätzlich die Fremdbedarfstrajektorie ermöglicht, wenn der erforderliche Zusatzaufwand akzeptabel ist;
Bewerten der Bezugstrajektorie und weiterer Trajektorien der Trajektorienschar unter Verwendung einer unteren Grenztrajektorie und einer oberen Grenztrajektorie, wobei der Bezugstrajektorie ein Bezugsaufwandswert und den Trajektorien je ein Aufwandswert zugeordnet wird, wobei die untere Grenztrajektorie eine momentane Idealtrajektorie für das Fahrzeug mit einem niedrigsten möglichen Fahraufwand repräsentiert und einen unteren Grenzwert eines Aufwandswerteraums definiert und die obere Grenztrajektorie eine Trajektorie mit einem momentan maximal akzeptablen Fahraufwand zur Kooperation repräsentiert und einen oberen Grenzwert des Aufwandswerteraums definiert;

Bestimmen eines Kooperationsbedarfswertes, der angibt, ob dem Fremdfahrzeug eine Kooperation angeboten werden soll, oder von dem Fremdfahrzeug eine Kooperation angefordert werden soll.

Auswählen zumindest einer Kooperationstrajektorie aus den Trajektorien der Trajektorienschar unter Verwendung des Bezugsaufwandswerts und des Kooperationsbedarfswerts, wobei als Kooperationstrajektorie eine Trajektorie mit einem Aufwandswert zwischen dem Bezugsaufwandswert und dem oberen Grenzwert als Alternativtrajektorie ausgewählt wird, wenn der Kooperationsbedarfswert repräsentiert, dass dem Fremdfahrzeug eine Kooperation angeboten werden soll, oder wobei als Kooperationstrajektorie eine Trajektorie mit einem Aufwandswert zwischen dem Bezugsaufwandswert und dem unteren Grenzwert als Bedarfstrajektorie ausgewählt wird, wenn der Kooperationsbedarfswert repräsentiert, dass von dem Fremdfahrzeug eine Kooperation angefordert werden soll.

Senden eines Datenpakets an das Fremdfahrzeug, wobei das Datenpaket die Bezugstrajektorie und den zu der Bezugstrajektorie zugehörigen Bezugsaufwandswert sowie zumindest die Kooperationstrajektorie und den zu der Kooperationstrajektorie zugehörigen Aufwandswert enthält, wobei der Aufwandswerteraum auf ein Intervall normiert wird, das dadurch definiert ist, dass die Aufwandswerte der beiden Grenztrajektorien durch fahrzeugübergreifend identische Werte repräsentiert werden.

Ideen zu Ausführungsformen der vorliegenden Erfindung können unter anderem als auf den nachfolgend beschriebenen Gedanken und Erkenntnissen beruhend angesehen werden.

Unter einem Fahrmanöver eines Fahrzeugs kann ein Lenken, Bremsen und/oder Beschleunigen des Fahrzeugs verstanden werden. Ein Antriebsstrang des Fahrzeugs kann das Fahrzeug durch ein Schleppmoment bremsen und durch ein Antriebsmoment beschleunigen. Eine Bremsanlage des Fahrzeugs kann das Fahrzeug durch ein Bremsmoment bremsen. Eine Lenkanlage des Fahrzeugs kann das Fahrzeug durch einen Lenkeinschlag lenken. Die Fahrmanöver sind geschwindigkeitsabhängig. Beispielsweise bestimmt eine aktuelle Geschwindigkeit des Fahrzeugs einen momentan minimal fahrbaren Kurvenradius. Durch ein Bremsen vor dem Lenken kann ein kleinerer Kurvenradius gefahren werden.

Das Fahrzeug kann als Eigenfahrzeug beziehungsweise Ego-Fahrzeug bezeichnet werden. In einer Vorrichtung des Fahrzeugs kann das hier beschriebene Verfahren ausgeführt werden. Das Fahrzeug kann zumindest teilweise von einem Fahrer gesteuert werden. Dazu kann der Fahrer Fahranweisungen von der Vorrichtung erhalten. Die Fahrmanöver können auch zumindest teilweise durch ein Steuergerät angesteuert werden. Das Fahrzeug kann auch vollautonom oder teilautonom durch das Steuergerät gesteuert werden.

Ein Fremdfahrzeug ist ein anderes Fahrzeug. Die Vorsilbe "Fremd" wird im Text auch bei anderen dem Fremdfahrzeug zugeordneten Begriffen zur Unterscheidbarkeit verwendet. Das Fremdfahrzeug wird durch einen fremden Fahrer oder ein fremdes Steuergerät gesteuert. Auf einer Fremdvorrichtung des Fremdfahrzeugs kann ebenfalls das hier vorgestellte Verfahren ausgeführt werden. Unter einem Fremdmanöver kann ein Fahrmanöver des Fremdfahrzeugs verstanden werden. Der hier vorgestellte Ansatz kann auch mit vertauschten Rollen, aus der Perspektive des Fremdfahrzeugs ausgeführt werden, wobei dabei die Begriffe Fahrzeug und Fremdfahrzeug sowie die zugehörigen Merkmale ausgetauscht sind.

Eine Trajektorie beschreibt einen Zustandsverlauf (z.B. Position, Orientierung, Geschwindigkeits- und Beschleunigungsvektoren, etc.) über die Zeit, auf dem das Fahrzeug unter Verwendung der Fahrmanöver gesteuert werden kann. Die Trajektorie ist mehrdimensional, insbesondere zweidimensional oder dreidimensional. Die Trajektorie kann auch unendlich dimensional sein, beispielsweise wenn der Zustand des Fahrzeugs durch eine Wahrscheinlichkeitsverteilung repräsentiert wird. Die Trajektorie kann auch als Schlauch definiert sein, der die Unsicherheiten der Lokalisierung umschließt. Die Trajektorie kann sich entlang einer von dem Fahrzeug zu befahrenden Fahroberfläche, beispielsweise einer Straße, erstrecken. Die Trajektorie beschreibt also, wo sich das Fahrzeug zu welcher Zeit befindet beziehungsweise zukünftig befinden wird. Die Trajektorie wird zumindest bis zu einem Prädikationshorizont vorausgeplant. Beispielsweise kann der Prädikationshorizont durch eine Sensorreichweite des Fahrzeugs bestimmt sein. Der Prädikationshorizont kann geschwindigkeitsabhängig sein. Ein Kollisionshorizont kann kleiner oder gleich dem Prädiktionshorizont sein. Der Kollisionshorizont kann ebenfalls geschwindigkeitsabhängig sein. Trajektorien werden als kollisionsfrei bewertet, wenn sie von dem Fahrzeug bis zum Kollisionshorizont so verlaufen, dass das Fahrzeug und das Fremdfahrzeug jeweils mindestens einen Mindestabstand zueinander aufweisen.

In einer Trajektorienschar ist eine Gruppe von möglichen Trajektorien zusammengefasst, die sich in einem gemeinsamen Punkt schneiden beziehungsweise von einem gemeinsamen Punkt ausgehen. Der gemeinsame Punkt kann eine aktuelle Position des Fahrzeugs zum aktuellen Zeitpunkt sein. An dem gemeinsamen Punkt fährt das Fahrzeug bei allen Trajektorien einer Trajektorienschar mit identischer Geschwindigkeit und identischer Richtung. Die Trajektorien der Trajektorienschar sind alle zumindest geringfügig unterschiedlich. Zumindest ein Fahrmanöver ist bei allen Trajektorien der Trajektorienschar unterschiedlich. Unterschiedliche Trajektorien der Trajektorienschar können sich kreuzen. Dabei kann eine zukünftige Position zum gleichen zukünftigen Zeitpunkt über unterschiedliche Trajektorien erreicht werden.

Ein Datenpaket kann eine in sich abgeschlossene Nachricht sein. Das Datenpaket kann als Manöverabstimmungsnachricht bezeichnet werden. Das Datenpaket kann über eine Kommunikationsschnittstelle von dem Fahrzeug zu Fremdfahrzeugen übermittelt werden.

Umgekehrt können die Fremdfahrzeuge Fremddatenpakete über die Kommunikationsschnittstelle für das Fahrzeug bereitstellen. In dem Datenpaket beziehungsweise dem Fremddatenpaket kann eine einzelne Trajektorieninformation einer einzelnen, für das Fahrzeug vorausgeplanten Trajektorie enthalten sein. Entweder das Fahrzeug oder das Fremdfahrzeug übermitteln Trajektorieninformationen von zumindest zwei Trajektorien. Insbesondere sind in dem Datenpaket Trajektorieninformationen von unterschiedlichen Trajektorien einer für das Fahrzeug vorausgeplanten Trajektorienschar enthalten. Beispielsweise können die Trajektorien als Abfolge von Ortskoordinaten in festgelegten Abständen voneinander abgebildet sein. Dabei können die Abstände räumlich oder zeitlich sein. Bei räumlichen Abständen sind die Ortskoordinaten mit Zeitstempeln versehen. Die Trajektorien können auch parametriert abgebildet sein. Dabei kann die Trajektorie als Kurve mathematisch beschrieben sein. Die Trajektorie kann abschnittsweise beschrieben sein.

In dem Datenpaket sind zu jeder Trajektorie Aufwandswerte enthalten, wobei ein Aufwandswerteraum der Aufwandswerte auf ein Intervall normiert sein kann, das dadurch definiert ist, dass die Aufwandswerte der beiden Grenztrajektorien durch fahrzeugübergreifend identische Werte repräsentiert werden. Dadurch sind die Aufwandswerte der Trajektorien vergleichbar, ohne einen Fahraufwand der einzelnen Fahrmanöver für jede Trajektorie nachvollziehen zu müssen.

Der Aufwandswert beschreibt den zum Abfahren einer der Trajektorien erforderlichen Fahraufwand. Der Fahraufwand kann für unterschiedliche Fahrzeuge unterschiedlich sein. Beispielsweise kann der Fahraufwand für ein agiles, leichtes Fahrzeug geringer sein, als für ein großes, schwerfälliges Fahrzeug auf der gleichen Trajektorie. Ein konstantes Fahren ohne Geschwindigkeitsänderung und Richtungsänderung kann mit einem geringen Fahraufwand beziehungsweise keinem Fahraufwand bewertet werden. Ein starkes Bremsen kann mit einem größeren Fahraufwand bewertet werden, als ein schwaches Bremsen. Ein starkes Beschleunigen kann mit einem größeren Fahraufwand bewertet werden, als ein schwaches Beschleunigen. Ein enger Kurvenradius kann mit einem größeren Fahraufwand bewertet werden, als ein weiter Kurvenradius. Der Aufwandswert vereint die entlang der jeweiligen Trajektorie erforderlichen Fahraufwände zu einem Zahlenwert. Eine Trajektorie mit extremen Fahrmanövern wird dadurch mit einem höheren Aufwandswert bewertet, als eine Trajektorie mit schwach ausgeprägten Fahrmanövern.

Die Trajektorien können sich schneiden. Wenn die unterschiedlichen Fahrzeuge einen Schnittpunkt der Trajektorien zu unterschiedlichen Zeiten erreichen und jederzeit zumindest durch den Mindestabstand voneinander beabstandet sind, werden die Trajektorien als kollisionsfrei bewertet. Der Mindestabstand kann in Richtung der Trajektorien größer sein, als quer zu den Trajektorien. Der Mindestabstand kann geschwindigkeitsabhängig sein. Wenn der Mindestabstand unterhalb des Kollisionshorizonts unterschritten wird, werden die Trajektorien als kollisionsbehaftet bewertet.

Als Bezugstrajektorie kann die Trajektorie bezeichnet werden, die von dem Fahrzeug tatsächlich abgefahren werden soll. Die Bezugstrajektorie kann als Solltrajektorie bezeichnet werden. Die Bezugstrajektorie wird unter Berücksichtigung der Fremdbezugstrajektorie ausgewählt. Wenn der erforderliche Zusatzaufwand akzeptabel ist, wird die Bezugstrajektorie zusätzlich unter Berücksichtigung der Fremdtrajektorie ausgewählt. Der Bezugsaufwandswert kennzeichnet einen zum Abfahren der Bezugstrajektorie erforderlichen Fahraufwand. Der Bezugsaufwandswert wird im Vergleich mit dem minimalen Fahraufwand entsprechend dem Aufwand der unteren Grenztrajektorie und dem maximalen Fahraufwand entsprechend dem Aufwand der oberen Grenztrajektorie bestimmt. Der minimale Fahraufwand kann mit einem Aufwandswert von minus Eins bewertet werden. Der maximale Fahraufwand kann mit einem Aufwandswert von Eins bewertet werden. Die Aufwandswerte der Trajektorien und der Bezugsaufwandswert der Bezugstrajektorie können zwischen Eins und minus Eins liegen. Die Trajektorien mit einem höheren Fahraufwand als die Bezugstrajektorie können größere Aufwandswerte als den Bezugsaufwandswert aufweisen. Die Trajektorien mit einem niedrigeren Fahraufwand als die Bezugstrajektorie können kleinere Aufwandswerte als den Bezugsaufwandswert aufweisen.

Eine Kooperationstrajektorie kann eine Alternativtrajektorie oder eine Bedarfstrajektorie sein. Ob die Kooperationstrajektorie eine Alternativtrajektorie oder eine Bedarfstrajektorie ist, bestimmt ein Verhältnis ihres Aufwandswerts zu dem Bezugsaufwandswert. Wenn der Aufwandswert größer als der Bezugsaufwandswert ist, ist die Kooperationstrajektorie eine Alternativtrajektorie. Wenn der Aufwandswert kleiner als der Bezugsaufwandswert ist, ist die Kooperationstrajektorie eine Bedarfstrajektorie.

Der momentan maximal akzeptable zusätzliche Fahraufwand für eine Kooperationsgewährung kann unter Verwendung eines Kooperationsbereitschaftswerts festgelegt werden. Der Kooperationsbereitschaftswert kann vorbestimmt werden. Beispielsweise kann ein Fahrer des Fahrzeugs den Kooperationsbereitschaftswert erhöhen, wenn das Fahrzeug kooperativere Trajektorien fahren soll. Ebenso kann der Fahrer den Kooperationsbereitschaftswert senken, wenn das Fahrzeug weniger kooperative Trajektorien fahren soll.

Der Kooperationsbereitschaftswert kann unter Verwendung der unteren Grenztrajektorie und/oder der oberen Grenztrajektorie und/oder der Bezugstrajektorie bestimmt werden. Der Kooperationsbereitschaftswert kann beispielsweise um einen Faktor höher sein, als der untere Grenzwert der unteren Grenztrajektorie und/oder der Aufwandswert der Bezugstrajektorie.

Das Datenpaket kann ferner die untere Grenztrajektorie und/oder die obere Grenztrajektorie beinhalten. Das Fremddatenpaket kann ebenso die untere Fremdgrenztrajektorie und/oder die obere Fremdgrenztrajektorie enthalten. Durch das Versenden zumindest einer der Grenztrajektorien kann im Fremdfahrzeug beziehungsweise im Fahrzeug der Bezugsaufwandswert in Relation gesetzt werden. Dadurch kann die Kooperationsbereitschaft des Fahrzeugs beziehungsweise Fremdfahrzeugs verbessert eingeschätzt werden.

Die Fremdbezugstrajektorie kann im eigenen Fahrzeug als Fremdbedarfstrajektorie eingestuft werden, wenn das Fremdfahrzeug nachrangig ist. Dann kann eine zu der Fremdbedarfstrajektorie innerhalb eines Kollisionshorizonts kollisionsfreie Trajektorie als Bezugstrajektorie ausgewählt werden. Das Fremdfahrzeug ist nachrangig, wenn es basierend auf den Verkehrsregeln Vorfahrt gewähren muss. Durch die Änderung der Einstufung ergeben sich mehr Möglichkeiten beim Auswählen der eigenen Trajektorie.

Ein Fremdkooperationsbereitschaftswert kann unter Verwendung des Fremdbezugsaufwandswerts und des Fremdaufwandswerts bestimmt werden. Die Kooperationstrajektorie kann unter Verwendung des Fremdkooperationsbereitschaftswerts ausgewählt werden. Der Fremdkooperationsbereitschaftswert kann beispielsweise ein rechnerischer Mittelwert des Fremdbezugsaufwandswerts und des Fremdaufwandswerts sein. Je niedriger der Fremdkooperationsbereitschaftswert ist, umso kooperationsbereiter ist das Fremdfahrzeug. Je höher der Fremdkooperationsbereitschaftswert ist, umso weniger kooperationsbereit ist das Fremdfahrzeug. Einem sehr kooperativen Fremdfahrzeug kann eine Bedarfstrajektorie als Kooperationstrajektorie übermittelt werden, die dem Fahrzeug mehr Vorteile bringt.

Das Fahrzeug kann eine Trajektorie als Alternativtrajektorie auswählen, die geringere Aufwandswerte als die obere Grenztrajektorie hat, um zu signalisieren, dass das das Fahrzeug zwar noch Kooperationsreserven besitzt, es jedoch in der aktuellen Situation nicht für notwendig ansieht, diese vollständig auszuschöpfen.

Eine Trajektorie kann als Kooperationstrajektorie ausgewählt werden, deren Aufwandswert um zumindest einen Kooperationsbetrag näher am oberen Grenzwert liegt, als der Bezugsaufwandswert. Durch den höheren Aufwandswert der Kooperationstrajektorie kann die Kooperationsbereitschaft signalisiert werden, da angezeigt wird, dass auch ein höherer Fahraufwand als für die Bezugstrajektorie akzeptabel ist.

Die Fremdtrajektorienschar kann auf einen Berechnungszeitpunkt der Trajektorien transformiert werden. Durch eine Datenübertragung des Fremddatenpakets und des Datenpakets sowie eine Berechnungszeit des Verfahrens können die Fremdtrajektorien einen Zeitversatz zu den eigenen Trajektorien aufweisen. Durch die zeitliche Transformation können Kollisionen genauer unterschieden werden. Der Sicherheitsabstand kann verringert werden, da die zukünftige Position des Fremdfahrzeugs genauer bestimmt werden kann.

Das Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die dazu ausgebildet ist, die Schritte einer Variante des hier vorgestellten Verfahrens in entsprechenden Einrichtungen durchzuführen, anzusteuern bzw. umzusetzen.

Die Vorrichtung kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC, ein Mikroprozessor oder ein Mikrocontroller zum Verarbeiten von Sensorsignalen des eigenen und/oder fremder Fahrzeuge und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie z. B. einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Verfahrens und der Vorrichtung in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Fahrzeugs mit einer Vorrichtung gemäß einem Ausführungsbeispiel;
Fig. 2 zeigt eine Darstellung eines Fahrzeugs und eines Fremdfahrzeugs mit einer Trajektorienschar und einer Fremdtrajektorienschar;
Fig. 3 zeigt eine Darstellung eines Fahrzeugs und eines Fremdfahrzeugs mit einer gemäß einem Ausführungsbeispiel auf die Fremdtrajektorienschar abgestimmten Trajektorienschar; und
Fig. 4 zeigt eine Darstellung eines Fahrzeugs und eines Fremdfahrzeugs mit gemäß einem Ausführungsbeispiel aufeinander abgestimmten Trajektorienscharen.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

Wenn Manöver zwischen Fahrzeugen abgestimmt werden, sodass unter anderem Komfort, Effizienz und Sicherheit erhöht werden, kann das als kooperatives Fahren bezeichnet werden. Dies wird durch die Möglichkeit einer direkten Fahrzeug-zu-Fahrzeug-Kommunikation (V2V) sowie durch die zunehmende Automatisierung von Fahrzeugen begünstigt.

In unterschiedlichen Szenarien können Verfahren für unterschiedliche Arten von Manöverabstimmungen zwischen Fahrzeugen durchgeführt werden.

Beispielsweise kann eine Manöverabstimmung beim Ausweichen vor Hindernissen ermöglicht werden. Dabei übermitteln zunächst die beteiligten Fahrzeuge eine Menge an möglichen Ausweichtrajektorien. Eine Trajektorie beschreibt dabei einen Zustandsverlauf über die Zeit beziehungsweise die Position des Fahrzeugs über die Zeit. Sie kodiert damit, wo sich das Fahrzeug zu einem zukünftigen Zeitpunkt befinden wird. Die Darstellung von Trajektorien kann entweder nichtparametrisch, z.B. als eine Sequenz von Ortspunkten oder diskreten oder kontinuierlichen Verteilungen über die Zeit oder parametrisch als eine von der Zeit abhängige Kurve, die z.B. in Form eines Polynoms oder einer Klothoide oder einem Fluss einer diskreten oder kontinuierlichen Verteilung vorliegt erfolgen. Sogenannte Alternativtrajektorien werden dabei an benachbarte Fahrzeuge übermittelt. Anschließend wird aus der Menge der möglichen Kombinationen der Alternativtrajektorien eine ausgewählt, bei der ein zu erwartender Schaden minimiert oder ganz vermieden wird. Bei der Bewertung der Kombinationen wird zudem eine Priorisierung der jeweiligen Alternativtrajektorien berücksichtigt.

Die Manöverabstimmung kann auch in generellen Situationen im Straßenverkehr erfolgen. Fahrzeuge können bei Bedarf Informationen zu ihrem aktuellen Fahrverhalten sowie ihr beabsichtigtes Fahrverhalten in Form einer Trajektorie übertragen. Ein weiteres Fahrzeug überprüft, ob es das beabsichtigte Manöver des sendenden Fahrzeugs ermöglichen kann und quittiert es gegebenenfalls implizit durch Anpassung seiner Bezugstrajektorie, sodass das Fahrzeug, das sein beabsichtigtes Fahrmanöver verschickt hat, es durchführen kann.

Eine weitere Möglichkeit für eine kooperative Manöverabstimmung basiert auf der Idee, zwei Trajektorien zu übertragen. Dabei werden eine geplante Trajektorie, die das aktuell geplante Fahrmanöver beschreibt, und eine gewünschte Trajektorie, die ein Manöver beschreibt, das das Fahrzeug gerne fahren würde, weil es z.B. effizienter ist, als das aktuell geplante, übertragen. Die geplante Trajektorie unterscheidet sich von der gewünschten Trajektorie dadurch, dass geplante Trajektorien von Fahrzeugen immer kollisionsfrei sind, während eine gewünschte Trajektorie immer eine Kollision mit einer geplanten Trajektorie aufweist. Wenn ein Fahrzeug nun von einem anderen Fahrzeug eine gewünschte Trajektorie als Fremdwunsch empfängt, die mit seiner geplanten Trajektorie (Ego- Plan) kollidiert, überprüft es anhand eines globalen Kostenkriteriums, ob es ein alternatives Manöver realisieren kann, um den Fremdwunsch zu ermöglichen, und quittiert die Kooperation durch eine Änderung des Ego-Plans, sodass keine Kollision mit dem Fremdwunsch mehr vorliegt.

### Ausführungsformen der Erfindung

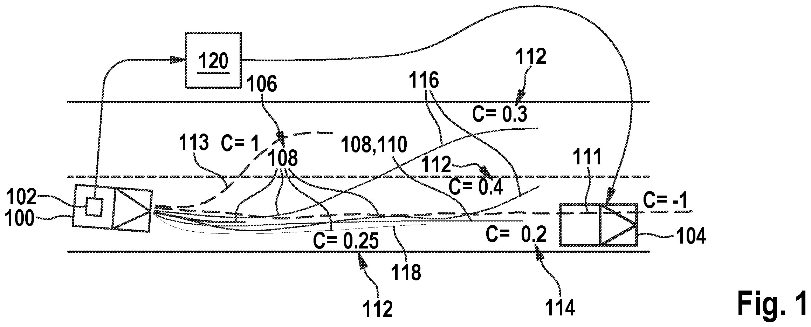

Fig. 1 zeigt eine Darstellung eines Fahrzeugs 100 mit einer Vorrichtung 102 zum kooperativen Abstimmen von zukünftigen Fahrmanövern des Fahrzeugs 100 mit Fahrmanövern zumindest eines anderen Fahrzeugs 104. Das Fahrzeug 100 fährt hier auf einer Straße hinter dem anderen Fahrzeug 104. Das andere Fahrzeug 104 kann als Fremdfahrzeug 104 bezeichnet werden. Sensoren des Fahrzeugs 100 erfassen eine aktuelle Verkehrssituation im Umfeld des Fahrzeugs 100. Alternativ oder ergänzend empfängt das Fahrzeug 100 Informationen über die Verkehrssituation über Funk. In Abhängigkeit von der Verkehrssituation wird von einem System des Fahrzeugs 100 für das Fahrzeug 100 eine Trajektorienschar 106 aus momentan möglichen Trajektorien 108 geplant und eine der Trajektorien 108 als Bezugstrajektorie 110 ausgewählt. Eine Trajektorie 108 beschreibt einen vorberechneten Verlauf von Ortskoordinaten, an denen das Fahrzeug 100 zukünftig sein würde, wenn es diese Trajektorie 108 durch Fahrmanöver, wie Lenken, Bremsen oder Beschleunigen abfahren würde. Die Bezugstrajektorie 110 ist dabei tatsächlich ausgewählt, um angesteuert zu werden.

Bei der Planung werden zusätzlich eine untere Grenztrajektorie 111 und eine obere Grenztrajektorie 113 geplant. Für die untere Grenztrajektorie 111 werden alle anderen Fahrzeuge 104 ignoriert und nur statische Hindernisse sowie die Straßenbegrenzungen berücksichtigt. Die untere Grenztrajektorie 111 wird also geplant, als ob das Fahrzeug 100 alleine auf der Straße fahren würde. Die obere Grenztrajektorie 113 ist im Wesentlichen das Gegenteil zur unteren Grenztrajektorie. Bei der Planung der oberen Grenztrajektorie 113 können beispielsweise alle notwendigen Fahrmanöver geplant werden, um anderen Verkehrsteilnehmern auszuweichen und Vorfahrt zu gewähren.

Die Trajektorien 108 weisen dabei alle den gleichen Ursprung auf. Der Ursprung liegt hier an einer aktuellen Position des Fahrzeugs 100. Die Trajektorienschar 106 wird bezogen auf einen Prädikationshorizont geplant. Der Prädikationshorizont kennzeichnet, an welcher Ortskoordinate das Fahrzeug 100 nach Ablauf einer Zeitdauer sein wird. Abhängig davon, wie das Fahrzeug 100 beschleunigt, gebremst und/oder gelenkt wird, sind die Trajektorien 108 unterschiedlich lang und enden an verschiedenen Ortskoordinaten. Beispielsweise ist hier eine Trajektorie 108 mit maximaler Verzögerung, eine Trajektorie 108 mit einem Spurwechsel, die Bezugstrajektorie 110 ohne Lenkeingriff und Bremseingriff, eine Trajektorie 108 mit einem Ausweichmanöver und eine Trajektorie 108 mit einem moderaten Bremseingriff dargestellt.

Die Trajektorien 108 der Trajektorienschar 106 werden in der Vorrichtung 102 hier jeweils exemplarisch mit einem Aufwandswert 112 bewertet. Die Bewertung läuft dabei im Vergleich mit den beiden Grenztrajektorien 111, 113 ab. Den Grenztrajektorien 111, 113 sind dabei die Extremwerte eines Aufwandswertebereichs zugeordnet. Die Grenzwerte sind hier minus Eins und plus Eins. Die untere Grenztrajektorie 111 definiert den unteren Grenzwert. Die obere Grenztrajektorie 113 definiert den oberen Grenzwert. Je ähnlicher eine Trajektorie 108 einer der Grenztrajektorien 111, 113 ist, umso näher ist ihr Aufwandswert 112 am jeweiligen Grenzwert. Auch die Bezugstrajektorie 110 wird so mit einem Bezugsaufwandswert 114 bewertet.

So wird die Trajektorie 108 mit dem Spurwechsel mit einem Aufwandswert 112 von 0,3 bewertet. Die Trajektorie 108 mit dem Ausweichmanöver wird mit einem Aufwandswert 112 von 0,4 bewertet, Die Bezugstrajektorie 110 wird mit einem Bezugsaufwandswert 114 von 0,2 bewertet und die Trajektorie 108 mit dem moderaten Bremseingriff wird mit einem Aufwandswert 112 von 0,25 bewertet.

Trajektorien 108 mit einem Aufwandswert 112 größer als der Bezugsaufwandswert 114 werden in einem Ausführungsbeispiel als Alternativtrajektorien 116 bezeichnet. Trajektorien 108 mit einem Aufwandswert kleiner als der Bezugsaufwandswert werden als Bedarfstrajektorien 118 bezeichnet.

Die Vorrichtung 102 sendet ein Datenpaket 120 an das andere Fahrzeug 104. In dem Datenpaket 120 sind Informationen zu der Bezugstrajektorie 110, dem Bezugsaufwandswert 114 und zumindest einer der Trajektorien 108 der Trajektorienschar 106 enthalten. Der zugehörige Aufwandswert 112 wird ebenfalls über das Datenpaket 120 übermittelt.

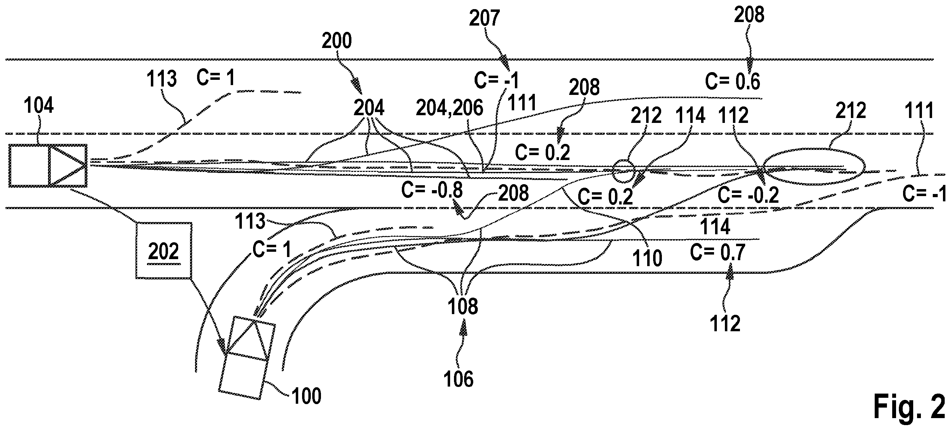

Fig. 2 zeigt eine Darstellung eines Fahrzeugs 100 und eines Fremdfahrzeugs 104 mit einer Trajektorienschar 106 und einer Fremdtrajektorienschar 200. Die Trajektorienschar 106 ist so geplant, dass das Fahrzeug 100 über eine Auffahrt auf eine mehrspurige Straße auffahren wird. Dabei ist die Bezugstrajektorie 110 so geplant, dass das Fahrzeug 100 etwa auf der Hälfte einer Beschleunigungsspur der Auffahrt auf die rechte Fahrspur der Straße wechseln wird. Als andere Möglichkeiten sind Trajektorien 108 geplant, auf denen das Fahrzeug 100 länger auf der Beschleunigungsspur bleibt und später auf die rechte Spur wechselt oder auf der Beschleunigungsspur abbremst. Wie in Fig. 1 sind die Bezugstrajektorie 110 und die anderen Trajektorien 108 mit einem Bezugsaufwandswert 114 beziehungsweise je einem Aufwandswert 112 in Relation zu der oberen Grenztrajektorie 113 und der unteren Grenztrajektorie 111 bewertet.

Das komfortable Wechseln ohne starke Beschleunigung ist dabei mit einem Aufwandswert 112 von -0,2 bewertet, das moderate Abbremsen mit 0,7 Die Bezugstrajektorie 110 weist einen Bezugsaufwandswert 114 von 0,2 auf.

Das Fremdfahrzeug 104 fährt bereits auf der rechten Fahrspur der Straße. Das Fahrzeug 100 erhält ein Fremddatenpaket 202 von dem Fremdfahrzeug 104 mit Informationen zu der geplanten Fremdtrajektorienschar 200. Für das Fremdfahrzeug 104 ist als Fremdbezugstrajektorie 206 geplant, konstant auf der rechten Fahrspur zu fahren. Auf alternativen Trajektorien 204 wird das Fremdfahrzeug 104 auf der rechten Fahrspur beschleunigt oder abgebremst. Auf einer weiteren Trajektorie 204 ist ein Spurwechsel auf die linke Fahrspur geplant. Im Fremddatenpaket 202 sind weiterhin ein Fremdbezugsaufwandswert 207 von -1,0, was in diesem Fall der unteren Grenztrajektorie entspricht, und Fremdaufwandswerte 208 zu den Fremdtrajektorien 204 hinterlegt. Dabei wird der Spurwechsel mit 0,6 bewertet, das Beschleunigen mit 0,2 und das leichte Bremsen durch Anlegen eines Schleppmoments mit -0,8. Der Fremdbezugsaufwandswert 207 und die Fremdaufwandswerte 208 sind dabei auf eine untere Grenztrajektorie 111 und eine obere Grenztrajektorie 113 des Fremdfahrzeugs 104 bezogen.

Im Fahrzeug 100 wird erkannt, dass das Fahrzeug 100 kooperationsbedürftig ist, da die Bezugstrajektorie 110 mit der Fremdbezugstrajektorie 206 zu einer Kollision 212 führen würde und das Fremdfahrzeug 104 vorfahrtsberechtigt ist. Daher werden die restlichen Trajektorien 108 der Trajektorienschar 106 auf Kollisionen 212 untersucht. Dabei wird weiter erkannt, dass das Fahrzeug 100 nicht ohne Kollision 212 mit der aktuellen Fremdbezugstrajektorie 206 von der Beschleunigungsspur auf die Straße wechseln kann, da die rechte Spur der Straße durch das Fremdfahrzeug 104 belegt ist.

Auf der einzigen kollisionsfreien Trajektorie 108 würde das Fahrzeug 100 auf der Beschleunigungsspur abgebremst.

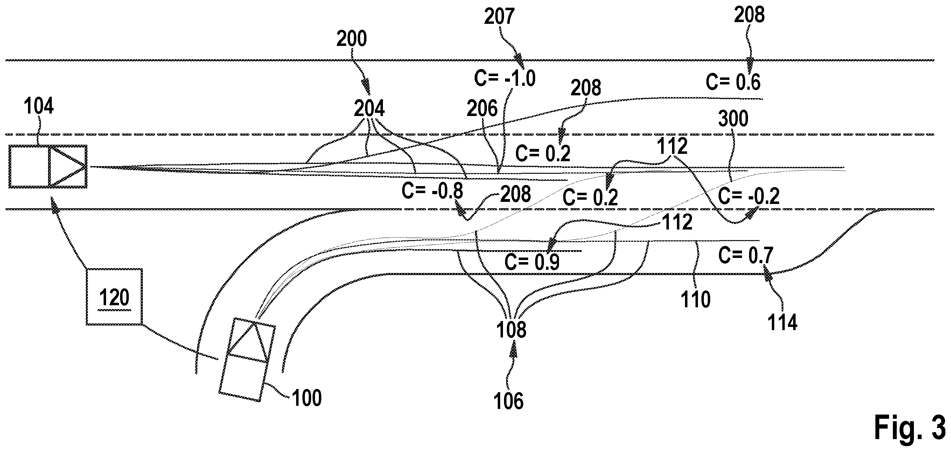

Fig. 3 zeigt eine Darstellung eines Fahrzeugs 100 und eines Fremdfahrzeugs 104 mit einer gemäß einem Ausführungsbeispiel auf die Fremdtrajektorienschar 200 abgestimmten Trajektorienschar 106. Die Darstellung entspricht dabei im Wesentlichen der Darstellung in Fig. 2. Hier hat das Fahrzeug 100 aus den Trajektorien 108 die einzige kollisionsfreie Trajektorie 108 als Bezugstrajektorie 110 ausgewählt. Auf der neuen Bezugstrajektorie 110 wird das Fahrzeug 100 jetzt auf der Beschleunigungsspur abgebremst, um das Fremdfahrzeug 104 auf der rechten Fahrspur passieren zu lassen.

Zusätzlich dazu wird zumindest eine Kooperationstrajektorie 300 aus den Trajektorien 108 ausgewählt. Die Kooperationstrajektorie 300 ist kollisionsbehaftet zu der Fremdbezugstrajektorie 206 aber kollisionsfrei zu zumindest einer der anderen Fremdtrajektorien 204.

Die neue Bezugstrajektorie 110 mit dem Bezugsaufwandswert 114 und die Kooperationstrajektorie 108 mit ihrem zugehörigen Aufwandswert 112 werden wie in Fig. 1 in einem Datenpaket 120 an das Fremdfahrzeug 104 gesendet.

Im Fremdfahrzeug 104 wird jetzt ebenfalls die Fremdbezugstrajektorie 206 auf Kollisionen 212 untersucht. Dabei wird erkannt, dass das kooperationsbedürftige Fahrzeug 100 seine Bezugstrajektorie 110 kollisionsfrei gewählt hat und als mögliche Alternative die Kooperationstrajektorie 300 anfragt.

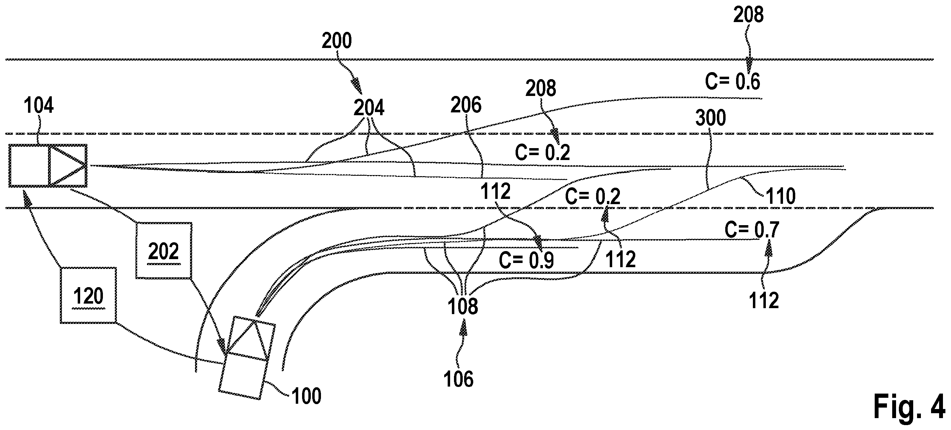

Fig. 4 zeigt eine Darstellung eines Fahrzeugs 100 und eines Fremdfahrzeugs 104 mit gemäß einem Ausführungsbeispiel aufeinander abgestimmten Trajektorienscharen 106, 200. Die Darstellung entspricht dabei im Wesentlichen den Darstellungen in den Figuren 2 und 3. Hier hat das Fremdfahrzeug 104 auf die empfangene Bezugstrajektorie 110 sowie die empfangene Kooperationstrajektorie 300 reagiert und seinerseits die Fremdtrajektorie 204 mit der geringen Verzögerung als neue Fremdbezugstrajektorie 206 ausgewählt.

Diese Informationen werden in einem neuen Fremddatenpaket 202 an das Fahrzeug 100 übermittelt. Dieses erkennt, dass jetzt die Kooperationstrajektorie 300 kollisionsfrei zur neuen Fremdbezugstrajektorie 206 sind und wählt die Kooperationstrajektorie 300 mit dem späten Spurwechsel auf die rechte Spur als neue Bezugstrajektorie 110 aus. Diese Informationen werden wieder in einem neuen Datenpaket 120 an das Fremdfahrzeug 104 gesendet.

Mit anderen Worten wird bei dem hier vorgestellten Ansatz eine dezentrale Abstimmung von kooperativen Fahrmanövern basierend auf optionalen Trajektorien vorgestellt.

Bei dem hier vorgestellten Ansatz wird ein Verfahren für eine kooperative Manöverabstimmung beschrieben, das auf dem Austausch von Trajektorien basiert. Hier werden Informationen über die aktuell geplante Trajektorie beziehungsweise Bezugstrajektorie und mögliche Trajektorien beziehungsweise z. B. für ein Ausweichmanöver (Alternativtrajektorien) bzw. für ein beabsichtigtes Manöver (Bedarfstrajektorien) mit zugehörigen Aufwandsbewertungen übertragen. Dadurch können die beteiligten Fahrzeuge ein optimales gemeinsames Manöver (mit dem niedrigsten Gesamtaufwand) abstimmen. Dabei wird nicht immer nur genau eine einzelne Wunschtrajektorie übertragen, was den Handlungsspielraum in komplexen Szenarien vergrößert und die Wahrscheinlichkeit einer für alle Seiten gewinnbringende Kooperation erhöht. Die Entscheidung, ob eine Bedarfstrajektorie ermöglicht wird, erfolgt nicht auf Basis einer globalen Kostenfunktion, die für die Kosten anderer Fahrzeuge Annahmen trifft. Für eine optimale Entscheidungsfindung wird also keine unter allen Fahrzeugherstellern gleiche Kostenfunktion benötigt beziehungsweise kann auf eine fehleranfällige Annahme verzichtet werden. Die eigenen Kosten werden in jedem Fahrzeug intern berechnet und normiert an die anderen Fahrzeuge übermittelt. Bezugstrajektorien erfordern keine unbedingte Kollisionsfreiheit, da die Kollisionsfreiheit auch dadurch verursacht werden kann, dass die Prädiktionshorizonte (Dauer der Vorausschau) der betrachteten Trajektorien nicht zusammenpassen, beispielsweise wenn einer der Kooperationspartner einen extrem kurzen Prädiktionshorizont von < 1s nutzt. In diesem Fall wird es selten zu Kollisionen von Bezugstrajektorien kommen. Im anderen Extrem wird ein sehr großer Prädiktionshorizont immer zu Kollisionen führen, was ein ständiges Versenden von Bedarfstrajektorien auslösen würde. Der "richtige" Prädiktionshorizont ist situationsabhängig.

Bei dem hier vorgestellten Ansatz bedarf eine Kooperation keiner aktiven Anfrage. Hier kann die Kooperation durch ein Fahrzeug, welches den zukünftigen Kooperationsbedarf durch ein anderes bereits im Vorfeld erkennt, weil es z.B. über ein viel umfassenderes Umweltmodell dank seiner besseren Sensorik verfügt, mittels Alternativtrajektorien angeboten werden.

Des Weiteren ist ein Verhandeln oder optimierendes Abstimmen von Manövern möglich. Beispielsweise könnte das erste Fahrzeug eine Bedarfstrajektorie verschicken, die das zweite Fahrzeug zum Verringern der Geschwindigkeit um 20 km/h nötigt, falls das zweite Fahrzeug kooperieren möchte. Bei dem hier vorgestellten Ansatz kann das zweite Fahrzeug mitteilen, dass eine Verringerung der Geschwindigkeit um 10 km/h akzeptabel wäre und es dann zu einer Kooperation bereit wäre. Dabei ist ein konkretes Ändern der Bezugstrajektorie nicht erforderlich, wodurch ein sofortiger Eingriff in die Fahrzeugregelung vermieden werden kann. So wird ein unverbindliches fortlaufendes Verhandeln/Optimieren erreicht.

Bei dem hier vorgestellten Ansatz erfolgt ein rein informatives Verschicken von Trajektorien. Die dezentrale kooperative Manöverabstimmung weist zwei Teile auf. Zum einen wird ein Protokoll mit einem Satz Regeln vorgestellt, das es Fahrzeugen erlaubt zu kommunizieren. Zum anderen werden Verfahren vorgestellt, um mit Hilfe dieses Protokolls unterschiedliche kooperative Manöverabstimmungen durchzuführen. Das grundlegende Prinzip ist, dass Fahrzeuge eine Trajektorienschar beziehungsweise eine Menge von Trajektorien beziehungsweise ein Trajektorienbündel austauschen. Diese Menge besteht aus einer "Bezugstrajektorie", 0 bis n "Alternativtrajektorien" und/oder 0 bis m "Bedarfstrajektorien".

Eine "Bezugstrajektorie" ist die Trajektorie, der das Fahrzeug aktuell folgt und als Sollgröße durch den Fahrregler/Fahrer umgesetzt wird. Die "Bezugstrajektorie" wird immer mitgeteilt. Eine "Alternativtrajektorie" beschreibt ein Manöver, das zwar "teurer" als die Bezugstrajektorie ist, aber das das Fahrzeug ggf. bereit wäre zu fahren. Die "Alternativtrajektorie" wird optional mitgeteilt. Eine "Bedarfstrajektorie"" beschreibt ein gewünschtes Manöver, das das Fahrzeug aufgrund niedrigerer "Kosten" gerne fahren würde, aber aktuell nicht fahren kann, z.B. weil der benötigte Manöverraum durch andere Fahrzeuge belegt ist. Die "Bedarfstrajektorie" wird optional mitgeteilt. Die Trajektorien (Bezugstrajektorie, Bedarfstrajektorie, Alternativtrajektorie) werden dabei nicht explizit per ID bzw. Marker codiert. Vielmehr wird neben den Trajektorien als solche noch für jede Trajektorie ein Kostenwert bzw. Aufwandswert übertragen. Dies ermöglicht es, jede Trajektorie in Bezug zu den anderen Trajektorien zu setzen und daraus deren Bedeutung und Priorität abzuleiten. Die Übertragung des Kostenwerts für jede Trajektorie erlaubt es anderen Verkehrsteilnehmern eine lokale Approximation der Kostenfunktion des sendenden Fahrzeugs zu ermitteln. Das gelingt insbesondere dann gut, wenn die Kostenwerte und die zugehörigen Trajektorien über die Zeit gesammelt auswertet werden.

Die Kosten können als "Kooperationskosten" definiert werden. So kann übermittelt werden, wie stark von einer Kooperation profitiert werden kann, bzw. wie viel Zusatzaufwand durch eine Kooperationsgewährung entstehen würde.

Zusätzlich ist vorgesehen, dass für jede Trajektorie optional eine Kategorie angegeben werden kann. Diese Kategorie ist hilfreich für die Berücksichtigung der Trajektorie in der Manöverplanung in den Fremdfahrzeugen beziehungsweise anderen Fahrzeugen.

Wenn das Fahrzeug einer "Notfalltrajektorie" folgt, dann befindet es sich in einem technischen (z.B. Reifenplatzer) oder situationsbedingten Notfall (z.B. Kind läuft auf Fahrbahn), d.h. es wird sich nicht an die normalen Verkehrsregeln halten können (z.B. Anhalten auf Autobahn) oder stellt eine potentielle Gefährdung für andere Fahrzeuge dar (durch starkes Bremsen/Lenken).

Ein "Kooperationsangebot" stellt ein Angebot an andere Fahrzeuge dar, um deren Bedarfstrajektorien zu ermöglichen. Die betroffenen Fahrzeuge können über ein weiteres optionales Feld mit den V2X-IDs der angesprochenen Fahrzeuge angegeben werden.

Wenn eine Trajektorie mit der Kategorie "Einsatzfahrzeug" markiert ist, hat das Fahrzeug auf dieser Trajektorie besonderen Vorrang, da es sich im Einsatz befindet (für das Fahrzeug als solches ist die Info bereits in der CAM (Cooperative Awareness Message) enthalten).

Über eine Kategorie "Vorschlag" können in Verbindung mit dem Feld der V2X-ID Trajektorien als Manöver-Vorschläge für spezifische andere Fahrzeuge versendet werden. Dabei wird ein Abstimmungskonzept unter Nutzung der Kooperationskostenwerte der Trajektorien ausgeführt. Die Kostenwerte der Trajektorien werden hier als "Kooperationskosten" definiert. Sie werden durch die Kosten zweier Grenztrajektorien ermittelt. Die unter Beachtung der Situation bestmögliche durch Kooperation erreichbare Trajektorie bekommt den Wert -1, da das Fahrzeug von Kooperation profitiert und wird als untere Grenztrajektorie bezeichnet. Die Trajektorie, die unter Verzicht auf eigene Kosten als Zugeständnis zur Ermöglichung fremder Wünsche gerade noch akzeptabel ist, wird mit dem Wert 1 definiert und als obere Grenztrajektorie bezeichnet. Die anderen Trajektorien incl. der Bezugstrajektorie werden entsprechend einsortiert. Dies kann dadurch geschehen, dass deren mit der lokalen Kostenfunktion ermittelten Kosten in Bezug zu den beiden Grenz- Trajektorien gesetzt werden.

Die Ermittlung der beiden Grenzen kann mit ausreichender Genauigkeit vorgenommen werden, indem für die bestmögliche Trajektorie (=untere Grenztrajektorie) eine Ego-Trajektorie in einem Umfeld bestimmt wird, in dem alle zur Kooperation fähigen anderen Fahrzeuge vernachlässigt werden, da diese im besten Fall jeden Kooperationswunsch ermöglichen, wobei die Fahrphysik ignoriert wird. Die Ermittlung der oberen Grenztrajektorie, die widerspiegelt welche Eingeständnisse zur Trajektorienermöglichung anderer noch akzeptabel sind, ist weniger eindeutig. Ein Ansatz für die Ermittlung der oberen Grenztrajektorie ist beispielsweise die Definition einer pauschalen Kostengrenze. Dabei wird dann die Trajektorie gewählt, deren Kosten z.B. 20% über denen eines Referenzkostenwertes bzw. Referenzaufwandswertes liegen. Die Referenzkosten können z.B. aus der Bezugstrajektorie, oder der bestmöglichen Trajektorie, oder bevorzugt aus einer Kombination beider ermittelt werden. Die obere Kostengrenze kann auch abhängig vom Manöver / der Situation angepasst werden. Im Fall des manuellen Fahrens kann die Kostengrenze aus dem Fahrerverhalten bei Kooperationsanfragen gelernt werden und wäre dann adaptiv.

Die Exaktheit der beiden Grenzen, bzw. deren Kosten, ist dabei weniger wichtig, als die grundsätzliche Tendenz, bzw. die Relation untereinander. Das Verschicken der beiden Grenztrajektorien ist dabei nicht unbedingt erforderlich, und kann zugunsten anderer Bedarfs- / Alternativtrajektorien, von denen das Fahrzeug annimmt, dass sie eine kooperative Situation insgesamt besser lösen, weggelassen werden. Wichtig für das hier vorgestellte Konzept ist jedoch, dass jedes Fahrzeug zusätzlich zu seiner Bezugstrajektorie noch mindestens eine Alternativtrajektorie als pauschales Kooperationsangebot verschickt. Falls mehrere Manöver mit ähnlichen Grenzkosten möglich sind (auf Autobahn: Bremsen oder Spurwechsel), ist es hilfreich für jedes Manöver eine Alternativtrajektorie zu versenden.

Die mitgeteilten Alternativtrajektorien können nun von kooperationsbedürftigen Fahrzeugen benutzt werden, um eine angepasste Bedarfstrajektorie zu generieren - ohne dafür im eigenen Fahrzeug die Situation aus Sicht des anderen Fahrzeugs beurteilen zu müssen. Ein kooperationsbedürftiges Fahrzeug versucht aus den Kombinationsmöglichkeiten empfangener Alternativtrajektorien eine Situation zu finden, die kollisionsfrei ist und die für den eigenen Bedarf die beste Lösung bietet. Diese zugehörige Trajektorie wird nun als Bedarfstrajektorie versendet. Über die Ego-Kosten dieser Trajektorie in Bezug auf die eigenen Grenztrajektorien wird der Wert der Kooperationskosten berechnet. Die anderen Fahrzeuge empfangen die Bedarfstrajektorie und da diese sich auf ihre versendeten Alternativtrajektorien bezieht, die sie bereits als akzeptabel ermittelt haben, gibt es eine gute Chance, dass sie die Kooperationsanfrage akzeptieren und entsprechend ihre Bezugstrajektorie anpassen, wodurch dann im nächsten Schritt aus der ursprünglichen Bedarfstrajektorie ebenfalls eine Bezugstrajektorie werden kann.

Wenn Fahrzeuge ihre ermittelte obere Grenztrajektorie als Alternativtrajektorie verschicken, würden den kooperationsgewährenden Fahrzeugen bei jeder Kooperationsanfrage maximale Kosten entstehen. Daher ist es "kooperativ", wenn das bedürftige Fahrzeug noch eine weitere Bedarfstrajektorie verschickt, die nicht die aus Sicht des Anfragenden beste Ausnutzung der durch die Alternativtrajektorien dargestellte Situation darstellt, sondern dem Kooperationsgewährenden ein Stück weit entgegenkommt (die "freundliche" Bedarfstrajektorie). Praktisch kann dies z.B. dadurch erreicht werden, dass der "Auffahrende auf eine Autobahn" stärker beschleunigt, als nötig wäre

Anders ausgedrückt, wird aus einem Pool von möglichen Ego-Trajektorien nicht die kostengünstigste ausgewählt, sondern eine die z.B. 20% teurer als die kostengünstigste ist.

Im umgekehrten Fall, wenn Fremdfahrzeuge als Alternativtrajektorien nicht die Grenztrajektorie verschicken (entsprechend ist der Kostenwert kleiner 1), kann versuchsweise noch eine Bedarfstrajektorie verschickt werden, die näher an der eigenen unteren Grenztrajektorie liegt, z.B. kostenmäßig zwischen der bestmöglichen Lösung und der besten Lösung bei Berücksichtigung der Alternativtrajektorien. Die anderen Fahrzeuge empfangen die beiden Bedarfstrajektorien und ermöglichen die für sie günstigste. Dabei haben sie noch die Möglichkeit zu entscheiden, wie weit sie dem Anfragenden entgegenkommen wollen. Die Auswertung der versendeten Kooperationskosten der Bedarfstrajektorien in Bezug zur versendeten Bezugstrajektorie kann dabei helfen.

Wenn ein Fahrzeug eine Kooperationsanfrage gewährt und seine Bezugstrajektorie anpasst, steigt der Wert ihrer versendeten Kooperationskosten, denn die Grenztrajektorien werden weitgehend konstant bleiben. Aus dem Verlauf dieses Wertes über die Zeit können die anderen Fahrzeuge z.B. ablesen, wie sich die Kooperationsbereitschaft des sendenden Fahrzeuges ändert und es ist z.B. eine Nachjustierung während einer laufenden Kooperation möglich. Nähert sich der Wert der 1, dann sollten die kooperationsanfragenden Fahrzeug Trajektorien wählen, die für das eigene Fahrzeug teurer sind und entsprechend dem kooperationsgewährenden Fahrzeug entgegenkommen (Z.B: während des Einfädelns mehr Beschleunigen). Nähert sich der Wert der -1, dann können Trajektorien gewählt werden, die mehr zum Vorteil des eigenen Fahrzeuges sind. Zudem kann aus dem Verlauf der "Kooperationskosten" der Bezugstrajektorie abgelesen werden, wie "kooperativ" ein Fahrzeug gerade ist (entsprechend ob es sinnvoll ist. eine Kooperationsanfrage an das Fahrzeug zu schicken). Ist der Wert nahe bei 1 oder gleich 1, dann ist das Fahrzeug gerade kaum bereit Zugeständnisse zu machen.

Im Fahrzeug kann das Verfahren in den nachfolgenden Schritten ablaufen:
Empfangen der Manöverabstimmungsnachrichten anderer Fahrzeuge (Dabei erfolgt ggf. ein zeitliches Alignment, also eine Transformation auf den aktuellen Zeitpunkt und/oder eine Umwidmung fremder Bezugstrajektorien in Bedarfstrajektorien, falls ein Fahrzeug nachrangig ist).

Bestimmen der eigenen Bezugstrajektorie, die mit anderen Bezugstrajektorien innerhalb eines Kollisionshorizonts kollisionsfrei ist.

Bestimmen der unteren Grenztrajektorie, also der Best-Case-Bedarfstrajektorie, (alle kooperationsfähigen Fahrzeuge werden ignoriert), was die -untere Kostengrenze C = -1 definiert.

Bestimmen der oberen Grenztrajektorie, also der Worst-Case-Alternativtrajektorie als gerade noch akzeptables Kooperationsangebot (z.B. mit Kosten, die 20% über einer Kombination der Kosten von Bezugstrajektorie und Best-Case Trajektorie liegen), was die obere Kostengrenze C = 1 definiert.

Optional können weitere Alternativtrajektorien bestimmt werden, die die eigene Kooperationsleidensfähigkeit nicht bis zur Grenze belasten. (z.B. mit Kosten, die nur 10% über den Kosten einer Kombination der Kosten von Bezugstrajektorie und Best-Case Trajektorie liegen).

Eigene Wünsche können durch das Bestimmen der "realistischen" Bedarfstrajektorie (Trajektorie mit den niedrigsten Ego-Kosten, die kollisionsfrei mit einem der Tupel aus anderen Alternativ- und/oder Bezugstrajektorien ist) eingebracht werden. Falls eine der berücksichtigten Alternativtrajektorien die Kooperationskosten C=1 hat, kann beim Bestimmen der "freundlichen" Bedarfstrajektorie beispielsweise eine Trajektorie, mit 20% höheren Ego-Kosten als die "realistische" Trajektorie bestimmt werden. Falls keine realistische kollisionsfreie Lösung gefunden wird, kann versuchsweise die Best-Case Trajektorie verschickt werden.

Zur Kooperationsgewährung können kollisionsfreie Tupel aus den Bezugs-/Alternativ/Bedarfstrajektorien anderer Fahrzeuge gebildet werden, wobei mindestens eine Bedarfstrajektorie enthalten ist. Für jedes obige Tupel kann eine ego-kostengünstigste eigene Lösung bestimmt werden. Insgesamt können ego-kostengünstigste Lösung ausgewählt werden. Voraussichtlich wird die Lösung für eine "freundliche Bedarfstrajektorie" des anderen Fahrzeugs gewinnen.

Über die Umsetzung der Kooperationsgewährung, wird final entschieden und bei positivem Entscheid die Bezugstrajektorie angepasst.

Abschließend werden die Bezugstrajektorie, die Alternativtrajektorie(n) und ggfs. Bedarfstrajektorie(n) versendet.

Das Konzept beinhaltet Trajektorien mit je einem Kostenwert und eine Möglichkeit zur Klassifizierung und Kategorisierung der Trajektorien. Die Trajektorien werden als Bezugstrajektorie, Bedarfstrajektorien und Alternativtrajektorien klassifiziert. Die Alternativtrajektorien können als Kooperationsangebote verstanden werden. Bezugstrajektorien können innerhalb einer definierten Beobachtungszeit kollisionsbehaftet sein. Nach Ablauf der Beobachtungszeit ist Kollisionsfreiheit erforderlich. Alternativtrajektorien und Bedarfstrajektorien sind auch dann gerechtfertigt, wenn die Bezugstrajektorien von Fahrzeugen nicht kollidieren.

So kann das Fahrzeug präventiv/proaktiv Trajektorien mitteilen, die es bereit wäre zu fahren, da die Nachteile im Rahmen seiner eigenen Kostenfunktion akzeptabel sind. Es besteht die Möglichkeit zur Verhandlung über eine Kooperation bevor Einfluss auf das jeweilige Fahrzeug genommen wird. Daraus ergibt sich die Möglichkeit zur effizienten Optimierung der Manöver der an einer Kooperation beteiligten Fahrzeuge. Weiterhin ergibt sich die Möglichkeit der extremen Senkung des Rechenbedarfs, da Präferenzen aller Kooperationspartner explizit über Aufwandswerte beziehungsweise Kosten kodiert und mitgeteilt werden und somit eine aufwändige Kostenanalyse für fremde Fahrzeuge entfallen kann. Durch den übertragenen Kostenwert erhöht sich die Chance auf eine erfolgreiche Kooperation, da die Kosten des Kooperationspartners besser abgeschätzt werden können, ggf. kann auch ganz auf eine lokale Abschätzung fremder Kosten verzichtet werden. Die Kosten für eine der empfangenen Fremdtrajektorien können auch lokal im Fahrzeug abgeschätzt werden. Gegebenenfalls können die empfangenen Kostenwerte aller Fremdkosten skaliert werden. Damit kann bei geringem Rechenaufwand eine grobe Vergleichbarkeit der eigenen und fremden Kosten ermöglicht werden. Durch die Einführung von Kategorien ergibt sich eine bessere Unterstützung von Manöverplanungsalgorithmen.

Es wird ein Verfahren zur kooperativen Manöverabstimmung zwischen mehreren Fahrzeugen beschrieben, welches auf dem periodischen oder event-basierten (d.h. bei Erfüllen gewisser Bedingungen) Austausch von Trajektorieninformationen zwischen den Fahrzeugen basiert. Zunächst werden die übertragenen Informationen beschrieben. Anschließend wird das Abstimmungskonzept in verschiedenen Verfahrensvarianten beschrieben.

Hier werden zunächst Regeln zum Versenden für die verschiedenen Trajektorien definiert. Die ausgetauschten Trajektorieninformationen, nachfolgend als das ausgetauschte Trajektorienschar beziehungsweise Trajektorienbündel bezeichnet, bestehen aus der Bezugstrajektorie des Fahrzeugs, einer Anzahl M (M>= 0) von Bedarfstrajektorien, einer Anzahl N (N>= 0) von Alternativtrajektorien und einem relativen Kostenwert C (-1 <=C <= 1) für jede übertragene Trajektorie.

Die Bezugstrajektorie ist besonders gekennzeichnet, z.B. dadurch, dass sie immer an erster Stelle in der Botschaft steht. Alternativ oder ergänzend kann sie auch durch eine explizite Markierung gekennzeichnet sein. Für jede Trajektorie kann eine spezielle Kategorisierung als Kooperationsangebot / Notfalltrajektorie / Einsatztrajektorie / etc. übermittelt werden. Jede Trajektorie kann mit einer Liste von V2X-Ids anderer Fahrzeuge ergänzt werden, auf die sich die Trajektorie mit ihrer Kategorisierung bezieht.

Die Kategorie "Vorschlag" kann verwendet werden, um Fremdfahrzeugen z.B. in besonderen Situationen, wie Rettungsgasse bilden oder Ausweichen vor Hindernissen, Trajektorien vorzuschlagen, die diese dann abfahren können.

Die relativen Kostenwerte der Trajektorien sind wie folgt festgelegt. Die Bezugstrajektorie hat einen Kostenwert Co im Intervall -1 < Co < 1. Die Bedarfstrajektorien haben einen Kostenwert C < Co. Die Alternativtrajektorien haben einen Kostenwert C > Co.

Die Bezugstrajektorie ist die Trajektorie, der das Fahrzeug aktuell folgt und die die Sollgröße für den Fahrregler / Fahrer ist. Bezugstrajektorien sollen grundsätzlich konfliktfrei sein, jedoch ist für begrenzte Zeiträume, oberhalb eines Prädiktionshorizonts oder oberhalb einer time-to-collision (TTC)-Schwelle ein Konflikt möglich. Treten Konflikte auf, werden sie gemäß StVO (Straßenverkehrsordnung) gelöst. Ein Konflikt kann von demjenigen Fahrzeug gelöst werden, das gemäß der StVO nachrangig ist. Das bevorrechtigte Fahrzeug darf also weiterhin seine konfliktbehaftete Trajektorie versenden.

Eine Alternativtrajektorie ist eine Trajektorie, die teurer als die Bezugstrajektorie ist, aber die das Fahrzeug trotzdem ggf. bereit wäre zu fahren. "Ggf." bedeutet hier "unter Vorbehalt", d.h. z.B. kann eine Zustimmung des Fahrers abgefragt werden, bevor eine Alternativtrajektorie zur Bezugstrajektorie werden kann. Es kann noch eine Bewertung der sich ergebenen Gesamtsituation stattfinden, wobei geprüft wird, ob den eigenen Zusatzkosten ein (nach lokaler Sicht) ausreichender Benefit bei den anderen Fahrzeugen gegenübersteht. Optional können die Alternativtrajektorien so geplant werden, dass sie konfliktfrei mit allen anderen Bezugstrajektorien sind.

Eine Bedarfstrajektorie ist eine Trajektorie, die besser das gewünschte Fahrziel erfüllt, somit günstiger als die Bezugstrajektorie ist. Die Bedarfstrajektorie ist konfliktbehaftet mit anderen Trajektorien. "Andere Trajektorien" sind dabei fremde Bezugstrajektorien. Falls diese z.B. aufgrund eines unterschiedlichen Planungshorizonts zu kurz sind, reicht es, wenn der Konflikt mit der internen Extrapolation der Bezugstrajektorien auftritt.

Die ausgetauschten Trajektorien eines Trajektorienbündels verstehen sich nicht ausschließlich als Trajektorien im Euklidischen Raum, sondern können auch Trajektorien in anderen möglichen Räumen sein. Ein Beispiel hierfür ist z.B. der Frenet-Raum entlang der Spurmitten, bei dem eine Trajektorie aus der Angabe der jeweiligen Spur sowie aus den Abschnitten auf der Spurmitte über die Zeit bestehen kann. Auf diese Weise kann das Trajektorienbündel in einem strukturierten Verkehrsraum (= z.B. Autobahn mit Spurmarkierungen) effizient übertragen werden.

In einem Ausführungsbeispiel verwenden die beteiligten Fahrzeuge die unabhängig von der Kooperation ausgetauschten Nachrichten zu ihrem Umfeld, wie z.B. Egozustand oder Sensorinformationen. Auf diese Weise können die Trajektorien anderer Verkehrsteilnehmer zusätzlich plausibilisiert werden, indem bspw. Situationen mit Hilfe fremder Sensordaten eindeutiger klassifiziert werden.

Ein Fahrzeug, das z.B. aus seiner Situationsanalyse erkennt, dass ein anderes Auto z.B. auf die Autobahn auffahren wird und dann Kooperationsbedarf haben wird, kann proaktiv bereits eine Kooperation anbieten. Dies tut es indem es eine passende Alternativtrajektorie erzeugt und diese verschickt (optional noch Setzen der Kategorie "Kooperationsangebot"). Das auffahrende Fahrzeug kann dann sofort eine passende Bedarfstrajektorie erzeugen und verschicken. Daraufhin wird das Fahrzeug auf der Hauptfahrbahn seine Bezugstrajektorie anpassen. Das hier beschriebene recheneffizientere Konzept basiert darauf, dass Fahrzeuge permanent (mehr oder weniger viel) Kooperation anbieten.

In bestimmten Situation kann es hilfreich sein, Trajektorien als Vorschläge an andere Fahrzeuge zu verschicken. Beispielsweise bei einem Einsatzfahrzeug, das auf der Autobahn eine Rettungsgasse gebildet haben möchte. Solche Vorschläge können z.B. für manuell gefahrene Fahrzeuge als Hinweis an den Fahrer sinnvoll sein. Eine andere Einsatzmöglichkeit kann bei plötzlichen Notsituation entstehen (Ausweichen vor einem unerwarteten Hindernis), wenn wenig Zeit für eine Abstimmung bleibt. Vorschläge können auch in Situationen, die uneindeutig sind, hilfreich sein, wie z.B. viele Fahrzeuge gleichzeitig an einer Rechts-vor-links Kreuzung. Hierzu berechnet ein Fahrzeug Trajektorien für andere Fahrzeuge, kennzeichnet sie als "Vorschlag" und versieht sie mit der V2X-Id der adressierten Fahrzeuge. Die Vorschlagstrajektorien werden an die Manöverkooperationsbotschaft angehängt und versendet. Die Kostenwerte der Vorschlagstrajektorien sind dabei bedeutungslos. Die anderen Fahrzeuge empfangen die Botschaft und sehen, dass für sie ein Vorschlag enthalten ist. Im Rahmen ihrer üblichen Trajektorienermittlung bewerten sie den Vorschlag auf Plausibilität und berücksichtigen ihn ggf. bevorzugt. Vorteil ist, dass sie bei möglicherweise alternativen internen Lösungsmöglichkeiten eine Variante vorgeschlagen bekommen, die von einer zentralen Stelle koordiniert wurde. Das hier beschriebene Verfahren ermöglicht damit eine zentrale Manöverabstimmung.

Durch den hier vorgestellten Ansatz kann eine effiziente Optimierung von kooperativen Manövern erreicht werden. Statt nur einer Bedarfs- oder nur einer Alternativtrajektorie verschickt jedes Fahrzeug mehrere Varianten dieser Trajektorien. Durch die mitgeteilten Kooperationskosten werden anderen Fahrzeugen die Präferenzen bekannt gemacht. Ein empfangendes Fahrzeug kann nun direkt seine bevorzugte Lösung auswählen. Außerdem kann es seinerseits noch weiter eine Reihe von Bedarfstrajektorien oder Alternativtrajektorien rund um die eigene Lösung ermitteln und versenden.

In folgenden Quellen können ergänzende Informationen betreffend den technischen Hintergrund zu dem hier vorgestellten Ansatz gefunden werden: https://www.imagine-online.de/home/ (aufgerufen am 26.01.2018) Projekt IMAGinE - Intelligente Manöver Automatisierung - kooperative Gefahrenvermeidung in Echtzeit Werling et al., "Optimal trajectories for time-critical street scenarios using discretized terminal manifolds", The International Journal of Robotics Research, 2011

Düring et al., "Adaptive Cooperative Maneuver Planning Algorithm for Conflict Resolution in Diverse Traffic Situations", International Conference on Connected Vehicles and Expo, 2014
DE10 2016 209 330 A1
DE10 2012 011 994 A1

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum kooperativen Abstimmen von zukünftigen Fahrmanövern eines Fahrzeugs (100) mit Fremdmanövern zumindest eines Fremdfahrzeugs (104), wobei das Verfahren die folgenden Schritte aufweist:
Empfangen eines Fremddatenpakets (202) von dem Fremdfahrzeug (104), wobei in dem Fremddatenpaket (202) eine Fremdtrajektorienschar (200) aus einer Fremdbezugstrajektorie (206) und, optional, zumindest einer Fremdtrajektorie (204) für das Fremdfahrzeug (104) enthalten ist, wobei in dem Fremddatenpaket (202) ferner ein die Fremdbezugstrajektorie (206) kennzeichnender Fremdbezugsaufwandswert (207) und, optional, ein die Fremdtrajektorie (204) kennzeichnender Fremdaufwandswert (208) enthalten sind;
Auswählen einer Trajektorie (108) aus einer Trajektorienschar (106) für das Fahrzeug (100) als Bezugstrajektorie (110) für das Fahrzeug (100) unter Verwendung der Fremdbezugstrajektorie (206) und optional der Fremdtrajektorie (204), wobei eine zu der Fremdbezugstrajektorie (206) und optional zu der Fremdtrajektorie (204) innerhalb eines Kollisionshorizonts kollisionsfreie Trajektorie (108) der Trajektorienschar (106) als Bezugstrajektorie (110) ausgewählt wird;
**dadurch gekennzeichnet, dass** das Verfahren weiter die Schritte aufweist:
Bewerten der Bezugstrajektorie (110) und weiterer Trajektorien (108) der Trajektorienschar (106) unter Verwendung einer unteren Grenztrajektorie (111) und
einer oberen Grenztrajektorie (113), wobei der Bezugstrajektorie (110) ein Bezugsaufwandswert (114) und den Trajektorien (108) je ein Aufwandswert (112) zugeordnet wird, wobei die untere Grenztrajektorie (111) eine momentane Idealtrajektorie für das Fahrzeug (100) mit einem niedrigsten möglichen Fahraufwand repräsentiert und einen unteren Grenzwert eines Aufwandswerteraums definiert und die obere Grenztrajektorie (113) eine Trajektorie mit einem momentan maximal akzeptablen Fahraufwand zur Kooperation repräsentiert und einen oberen Grenzwert des Aufwandswerteraums definiert;
Bestimmen eines Kooperationsbedarfswerts unter Verwendung des Bezugsaufwandswerts (114), des unteren Grenzwerts, des oberen Grenzwerts, des Fremdbezugsaufwandswerts (207) und, optional, des Fremdaufwandswerts (208),
wobei der Kooperationsbedarfswert repräsentiert, ob dem Fremdfahrzeug (104) eine Kooperation angeboten werden soll, oder von dem Fremdfahrzeug (104) eine Kooperation angefordert werden soll;
Auswählen zumindest einer Kooperationstrajektorie (300) aus den Trajektorien (108) der Trajektorienschar (106) unter Verwendung des Bezugsaufwandswerts (114) und des Kooperationsbedarfswerts, wobei als Kooperationstrajektorie (300) eine Trajektorie (108) mit einem Aufwandswert (112) zwischen dem Bezugsaufwandswert (114) und dem oberen Grenzwert als Alternativtrajektorie ausgewählt wird, wenn der Kooperationsbedarfswert repräsentiert, dass dem Fremdfahrzeug (104) eine Kooperation angeboten werden soll, oder wobei als Kooperationstrajektorie (300) eine Trajektorie (108) mit einem Aufwandswert (112) zwischen dem Bezugsaufwandswert (114) und dem unteren Grenzwert als Bedarfstrajektorie ausgewählt wird, wenn der Kooperationsbedarfswert repräsentiert, dass von dem Fremdfahrzeug (104) eine Kooperation angefordert werden soll.
Senden eines Datenpakets (120) an das Fremdfahrzeug (104), wobei das Datenpaket (120) die Bezugstrajektorie (110) und den zu der Bezugstrajektorie (110) zugehörigen Bezugsaufwandswert (114) sowie zumindest die Kooperationstrajektorie (300) und den zu der Kooperationstrajektorie (300) zugehörigen Aufwandswert (112) enthält.

2. Verfahren gemäß Anspruch 1, bei dem im Schritt des Bewertens der momentan maximal akzeptable Fahraufwand unter Verwendung eines Referenzaufwandswerts festgelegt wird.

3. Verfahren gemäß Anspruch 2, bei dem der Referenzaufwandswert unter Verwendung der unteren Grenztrajektorie (111) und/oder der Bezugstrajektorie (110) bestimmt wird.

4. Verfahren gemäß einem der vorhergehenden Ansprüche, bei dem im Schritt des Sendens das Datenpaket (120) ferner die untere Grenztrajektorie (111) und/oder die obere Grenztrajektorie (113) beinhaltet.

5. Verfahren gemäß einem der vorhergehenden Ansprüche, bei dem im Schritt des Empfangens die Fremdbezugstrajektorie (206) als Fremdbedarfstrajektorie (204) eingestuft wird, wenn das Fremdfahrzeug (104) nachrangig ist, wodurch dann das Fremdfahrzeug für die Auswahl der innerhalb des Kollisionshorizonts kollisionsfreien Trajektorie (108) als Bezugstrajektorie (110) nicht mehr berücksichtigt wird.

6. Verfahren gemäß einem der vorhergehenden Ansprüche, bei dem im Schritt des Empfangens ein Fremdkooperationsbereitschaftswert unter Verwendung des Fremdbezugsaufwandswerts (207) und, optional, des Fremdaufwandswerts (208) bestimmt wird, wobei im Schritt des Auswählens die Kooperationstrajektorie (300) ferner unter Verwendung des Fremdkooperationsbereitschaftswerts ausgewählt wird.

7. Verfahren gemäß einem der vorhergehenden Ansprüche, bei dem im Schritt des Auswählens eine Trajektorie (108) als Kooperationstrajektorie (300) ausgewählt wird, deren Aufwandswert (112) um zumindest einen Kooperationsbetrag näher am oberen Grenzwert liegt, als der Bezugsaufwandswert (114).

8. Verfahren gemäß einem der vorhergehenden Ansprüche, bei dem im Schritt des Empfangens die Fremdtrajektorienschar (200) auf einen Berechnungszeitpunkt der Trajektorien (108) transformiert werden.

9. Vorrichtung (102), wobei die Vorrichtung dazu ausgebildet ist, das Verfahren gemäß einem der vorhergehenden Ansprüche in entsprechenden Einrichtungen auszuführen, umzusetzen und/oder anzusteuern.

10. Computerprogrammprodukt, das dazu eingerichtet ist, das Verfahren gemäß einem der Ansprüche 1 bis 8 auszuführen, umzusetzen und/oder anzusteuern.

11. Maschinenlesbares Speichermedium, auf dem das Computerprogrammprodukt gemäß Anspruch 10 gespeichert ist.

## Claims

1. Method for cooperatively tuning future driving manoeuvres of a vehicle (100) using external manoeuvres of at least one external vehicle (104), the method having the following steps:
receiving an external data packet (202) from the external vehicle (104), an external trajectory set (200), consisting of an external benchmark trajectory (206) and optionally at least one external trajectory (204) for the external vehicle (104), being contained in the external data packet (202), an external benchmark complexity value (207) which characterises the external benchmark trajectory (206) and optionally an external complexity value (208) which characterises the external trajectory (204) further being contained in the external data packet (202);
selecting a trajectory (108) from a trajectory set (106) for the vehicle (100) as a benchmark trajectory (110) for the vehicle (100) using the external benchmark trajectory (206) and optionally the external trajectory (204), a trajectory (108) from the trajectory set (106) which is collision-free with respect to the external benchmark trajectory (206) and
optionally with respect to the external trajectory (204) within a collision horizon being selected as a benchmark trajectory (110);
**characterised in that** the method further has the steps of:
evaluating the benchmark trajectory (110) and further trajectories (108) from the trajectory set (106) using a lower bound trajectory (111) and an upper bound trajectory (113), the benchmark trajectory (110) being assigned a benchmark complexity value (114) and the trajectories (108) each being assigned a complexity value (112), the lower bound trajectory (111) representing a current ideal trajectory for the vehicle (100) having a lowest possible driving complexity and defining a lower bound of a complexity value space, and the upper bound trajectory (113) representing a trajectory having a current maximum acceptable driving complexity for cooperation and defining an upper bound value of the complexity value space;
determining a cooperation requirement value using the benchmark complexity value (114), the lower bound value, the upper bound value, the external benchmark complexity value (207) and optionally the external complexity value (208), the cooperation requirement value representing whether cooperation is to be offered to the external vehicle (104) or whether cooperation is to be requested from the external vehicle (104);
selecting at least one cooperation trajectory (300) from the trajectories (108) of the trajectory set (106) using the benchmark complexity value (114) and the cooperation requirement value, a trajectory (108) having a complexity value (112) between the benchmark complexity value (114) and
the upper boundary value being selected as a cooperation trajectory (300) as an alternative trajectory if the cooperation requirement value represents that cooperation is to be offered to the external vehicle (104), or a trajectory (108) having a complexity value (112) between the benchmark complexity value (114) and the lower boundary value being selected as a cooperation trajectory (300) as a requirement trajectory if the cooperation requirement value represents that cooperation is to be requested from the external vehicle (104) ;
sending a data packet (120) to the external vehicle (104), the data packet (120) containing the benchmark trajectory (110) and the benchmark complexity value (114) associated with the benchmark trajectory (110) as well as at least the cooperation trajectory (300) and the complexity value (112) associated with the cooperation trajectory (300).

2. Method according to claim 1, in which, in the evaluation step, the current maximum acceptable driving complexity is established using a reference complexity value.

3. Method according to claim 2, in which the reference complexity value is determined using the lower bound trajectory (111) and/or the benchmark trajectory (110).

4. Method according to any of the preceding claims, in which, in the sending step, the data packet (120) further includes the lower bound trajectory (111) and/or the upper bound trajectory (113).

5. Method according to any of the preceding claims, in which, in the receiving step, the external benchmark trajectory (206) is classified as an external requirement trajectory (204) if the external vehicle (104) is subordinate, and as a result the external vehicle is then no longer taken into account in the selection of the trajectory (108) which is collision-free within the collision horizon as a benchmark trajectory (110).

6. Method according to any of the preceding claims, in which, in the receiving step, an external cooperation readiness value is determined using the external benchmark complexity value (207) and optionally the external complexity value (208), the cooperation trajectory (300) further being selected using the external cooperation readiness value in the selection step.

7. Method according to any of the preceding claims, in which, in the selection step, a trajectory (108) of which the complexity value (112) is closer than the benchmark complexity value (114) to the upper bound value by at least a cooperation amount is selected as a cooperation trajectory (300).

8. Method according to any of the preceding claims, in which, in the receiving step, the external trajectory set (200) is transformed onto a time at which the trajectories (108) are calculated.

9. Device (102), the device being configured to perform, implement and/or control the method according to any of the preceding claims in appropriate apparatuses.

10. Computer program product set up to perform, implement and/or control the method according to any of claims 1 to 8.

11. Machine-readable storage medium on which the computer program product according to claim 10 is stored.

## Revendications

1. Procédé pour accorder de manière coopérative des manœuvres de conduite futures d'un véhicule (100) avec des manœuvres externes d'au moins un véhicule externe (104), le procédé comprenant les étapes consistant à :
recevoir un paquet de données externes (202) en provenance du véhicule externe (104), le paquet de données externes (202) contenant un ensemble de trajectoires externes (200) composé d'une trajectoire de référence externe (206) et, en option,
d'au moins une trajectoire externe (204) pour le véhicule externe (104), dans lequel le paquet de données externes (202) contient en outre une valeur d'effort de référence externe (207) caractérisant la trajectoire de référence externe (206) et, en option, une valeur d'effort externe (208) caractérisant la trajectoire externe (204) ;
sélectionner une trajectoire (108) parmi un ensemble de trajectoires (106) pour le véhicule (100) en tant que trajectoire de référence (110) pour le véhicule (100) en utilisant la trajectoire de référence externe (206) et, en option, la trajectoire externe (204), dans lequel une trajectoire (108) de l'ensemble de trajectoires (106) qui est sans collision par rapport à la trajectoire de référence externe (206) et, en option, par rapport à la trajectoire externe (204) à l'intérieur d'un horizon de collision est sélectionnée en tant que trajectoire de référence (110) ;
**caractérisé en ce que** le procédé présente en outre les étapes consistant à :
évaluer la trajectoire de référence (110) et d'autres trajectoires (108) de l'ensemble de trajectoires (106) en utilisant une trajectoire limite inférieure (111) et une trajectoire limite supérieure (113), dans lequel une valeur d'effort de référence (114) est associée à la trajectoire de référence (110) et une valeur d'effort (112) est associée à chacune des trajectoires (108), dans lequel la trajectoire limite inférieure (111) représente une trajectoire idéale instantanée pour le véhicule (100) avec un effort de conduite le plus faible possible et définit une valeur limite inférieure d'un espace de valeurs d'effort et la trajectoire limite supérieure (113) représente une trajectoire avec un effort de conduite maximum acceptable instantané pour la coopération et définit une valeur limite supérieure de l'espace de valeurs d'effort ;
déterminer une valeur de besoin de coopération en utilisant la valeur d'effort de référence (114), la valeur limite inférieure, la valeur limite supérieure, la valeur d'effort de référence externe (207) et, en option, la valeur d'effort externe (208), dans lequel la valeur de besoin de coopération représente si une coopération doit être proposée au véhicule externe (104) ou si une coopération doit être demandée au véhicule externe (104) ;
sélectionner au moins une trajectoire de coopération (300) parmi les trajectoires (108) de l'ensemble de trajectoires (106) en utilisant la valeur d'effort de référence (114) et la valeur de besoin de coopération, dans lequel une trajectoire (108) avec une valeur d'effort (112) comprise entre la valeur d'effort de référence (114) et la valeur limite supérieure en tant que trajectoire alternative est sélectionnée en tant que trajectoire de coopération (300) lorsque la valeur de besoin de coopération représente qu'une coopération doit être proposée au véhicule externe (104), ou dans lequel une trajectoire (108) avec une valeur d'effort (112) comprise entre la valeur d'effort de référence (114) et la valeur limite inférieure en tant que trajectoire de besoin est sélectionnée en tant que trajectoire de coopération (300) lorsque la valeur de besoin de coopération représente qu'une coopération doit être demandée au véhicule externe (104),
envoyer un paquet de données (120) au véhicule externe (104), le paquet de données (120) contenant la trajectoire de référence (110) et la valeur d'effort de référence (114) associée à la trajectoire de référence (110) ainsi qu'au moins la trajectoire de coopération (300) et la valeur d'effort (112) associée à la trajectoire de coopération (300).

2. Procédé selon la revendication 1, dans lequel, à l'étape d'évaluation, l'effort de conduite maximum acceptable instantané est défini en utilisant une valeur d'effort de référence.

3. Procédé selon la revendication 2, dans lequel la valeur d'effort de référence est déterminée en utilisant la trajectoire limite inférieure (111) et/ou la trajectoire de référence (110).

4. Procédé selon l'une des revendications précédentes, dans lequel, à l'étape d'envoi, le paquet de données (120) contient en outre la trajectoire limite inférieure (111) et/ou la trajectoire limite supérieure (113).

5. Procédé selon l'une des revendications précédentes, dans lequel, à l'étape de réception, la trajectoire de référence externe (206) est classée comme trajectoire de besoin externe (204) si le véhicule externe (104) est subordonné, le véhicule externe n'étant alors plus pris en compte pour la sélection de la trajectoire sans collision (108) à l'intérieur de l'horizon de collision en tant que trajectoire de référence (110) .

6. Procédé selon l'une des revendications précédentes, dans lequel, à l'étape de réception, une valeur de volonté de coopération externe est déterminée en utilisant la valeur d'effort de référence externe (207) et, en option, la valeur d'effort externe (208), dans lequel, à l'étape de sélection, la trajectoire de coopération (300) est en outre sélectionnée en utilisant la valeur de volonté de coopération externe.

7. Procédé selon l'une des revendications précédentes, dans lequel, à l'étape de sélection, une trajectoire (108) dont la valeur d'effort (112) est plus proche de la valeur limite supérieure que la valeur d'effort de référence (114) d'au moins un montant de coopération est sélectionnée en tant que trajectoire de coopération (300).

8. Procédé selon l'une des revendications précédentes, dans lequel, à l'étape de réception, l'ensemble de trajectoires externes (200) sont transformés à un instant de calcul des trajectoires (108).

9. Dispositif (102), le dispositif étant conçu pour exécuter, mettre en œuvre et/ou commander le procédé selon l'une des revendications précédentes dans des moyens correspondants.

10. Produit programme d'ordinateur conçu pour exécuter, mettre en œuvre et/ou commander le procédé selon l'une des revendications 1 à 8.

11. Support de stockage lisible par machine sur lequel est stocké le produit programme d'ordinateur selon la revendication 10.
